# EUROPEAN PATENT SPECIFICATION

(11) **EP 1 449 882 B1**
(45) Date of publication and mention of the grant of the patent: **02.06.2010**
(21) Application number: 02777895.0
(22) Date of filing: 21.10.2002
(51) Int. Cl.: C08L 45/00, C08L 23/08

(54) **IMPACT-RESISTANT CYCLIC OLEFIN BASED RESIN COMPOSITION AND MOLDINGS**
SCHLAGZÄHE, AUF CYCLISCHEM OLEFIN BASIERENDES HARZ ENTHALTENDE ZUSAMMENSETZUNG UND FORMKÖRPER
COMPOSITION DE RESINE A BASE D'OLEFINES CYCLIQUES RESISTANTE AUX CHOCS ET MOULAGES

(30) Priority: 22.10.2001 JP 2001324006
(43) Date of publication of application: 25.08.2004
(73) Proprietor: Polyplastics Co., Ltd., Tokyo 108-8280 (JP)
(72) Inventor: KANAI, Hiroyuki, Polyplastics Co., Ltd., Fuji-shi, Shizuoka 416-8533 (JP)
(74) Representative: Peel, James Peter
(86) International application number: PCT/JP2002/010887
(87) International publication number: WO 2003/035751

(56) References cited:
- EP-A- 0 530 767
- EP-A- 0 743 341
- DE-A- 19 610 415
- JP-A- 6 313 068
- JP-A- 8 059 906
- JP-A- 9 118 811
- JP-A- 10 195 282
- PATENT ABSTRACTS OF JAPAN vol. 1998, no. 12, 31 October 1998 (1998-10-31) & JP 10 195282 A (JSR CORP.), 28 July 1998 (1998-07-28)

## Description

### Technical Field

The present invention relates to a cyclic olefin based resin composition which contains a cyclic olefin based resin, a modified cyclic olefin based resin prepared by grafting an unsaturated carboxylic acid or an unsaturated carboxylic acid anhydride to the cyclic olefin based resin, an olefinic elastomer, and a modified polyolefin having an epoxy group, and a molding thereof. The molding of the cyclic olefin based resin composition of the present invention is excellent in impact resistance, resistance to flaking off.

### Background Art

Cyclic olefin based resins are amorphous and thermoplastic olefin based resins each having a cyclic olefin skeleton in its backbone, are excellent in transparency, low birefringence, heat resistance, light weight property, dimensional stability, low water absorption, hydrolyzability resistance, and chemical resistance, and each include characteristics such as a low dielectric constant, low dielectric loss, and no inclusion of environmental load substances.

Thus, the cyclic olefin based resins have been used for widely intended purposes including: medicine related instruments such as prefilled syringes, and containers and stopper cocks for infusions; high frequency electronic parts; and packages and containers of chemicals and foods as well as optical uses such as optical discs, lenses, and optical waveguides.

However, application ranges of the cyclic olefin based resins are limited because the resins are inferior in impact resistance. Efforts to improve the impact resistance of cyclic olefin based resins and to extend the intended uses thereof have been ever made.

For example, JP 01-163236 A proposes a cyclic olefin based resin composition with high impact resistance where an olefinic elastomer is combined to a cyclic olefin based resin. However, the olefinic elastomer is extremely effective for improving the impact resistance but is inferior in affinity with the cyclic olefin based resin, and there is a drawback in that the surface of a molding of the composition flakes off.

JP 01-256548 A proposes a cyclic olefin based resin composition with high impact resistance where a styrenic elastomer is combined to a cyclic olefin based resin. Surface flaking is difficult to occur on a molding of the composition because the styrenic elastomer has a high affinity with the cyclic olefin based resin, but the styrenic elastomer is inferior in improvement effect on impact resistance to the olefinic elastomer.

### Disclosure of the Invention

An object of the present invention is to provide a cyclic olefin based resin composition for moldings which are excellent in impact resistance, resistance to surface flaking off.

As a result of the study, the inventors of the present invention have found a method of effectively improving impact resistance while preventing the surface of moldings from flaking off by using a cyclic olefin based resin composition where a cyclic olefin based resin (A), a modified cyclic olefin based resin (B) prepared by grafting an unsaturated carboxylic acid or an unsaturated carboxylic acid anhydride, an olefinic elastomer (C), and a modified polyolefin (D) having an epoxy group are in a specified ratio, and the inventors have completed the present invention.

That is, according to a first aspect of the present invention, there is provided a cyclic olefin based resin composition including:
a cyclic olefin based resin (A);
a modified cyclic olefin based resin (B) prepared by grafting and/or copolymerizing an unsaturated carboxylic acid or an unsaturated carboxylic acid anhydride to the cyclic olefin based resin (A);
an olefinic elastomer (C); and
a modified polyolefin (D) having an epoxy group,
   in which a weight ratio A/B of the component A to the component B is in the range of 98/2 to 2/98,
a weight ratio C/D of the component C to the component D is in the range of 98/2 to 2/98, and
a ratio (A+B)/(C+D) of the total weight of the component A and the component B to the total weight of the component C and the component D is in the range of 95/5 to 50/50.

According to a second aspect of the present invention, there is provided a cyclic olefin based resin composition according to the first aspect of the present invention, in which the component C is a copolymer of ethylene and an α-olefin.

According to a third aspect of the present invention, there is provided a cyclic olefin based resin composition according to the first or second aspect of the present invention, in which the component D is a copolymer of ethylene and glycidyl (meth)acrylate.

According to a fourth aspect of the present invention, there is provided a cyclic olefin based resin composition according to any one of the first to third aspects of the present invention, in which the component B is a modified cyclic olefin based resin which is obtained by a cyclic olefin based resin being grafted with (meth)acrylic acid or maleic anhydride.

According to a fifth aspect of the present invention, there is provided a cyclic olefin based resin composition according to any one of the first to fourth aspects of the present invention, in which a cyclic olefin based resin of the component A and a cyclic olefin based resin used as a base resin prior to modification in the component B are independently a copolymer of ethylene and a cyclic olefin.

According to a sixth aspect of the present invention, there is provided a molding of cyclic olefin based resin obtained by injection molding, compression molding, injection compression molding, extrusion, or blow molding of the cyclic olefin based resin composition according to any one of the first to fifth aspects of the present invention.

### Best Mode for carrying out the Invention

Hereinafter, the present invention is illustrated in detail.

### (A) Cyclic olefin based resin

A cyclic olefin based resin (A) (referred to as component A) is a high molecular compound the backbone of which is made up of carbon-carbon bonds and which has a cyclic hydrocarbon structure in at least a part of the backbone. This cyclic hydrocarbon structure is introduced by using as a monomer a compound (cyclic olefin) having at least one olefinic double bond in the cyclic hydrocarbon structure typified by norbornene or tetracyclododecene.

Cyclic olefin based resins (A) are classified into addition (co)polymers of cyclic olefins or hydrogenates thereof (A1), addition copolymers of cyclic olefins and α-olefins or hydrogenates thereof (A2), and ring-opening (co)polymers of cyclic olefins or hydrogenates thereof (A3) depending on methods of manufacturing the resins.

Specific examples of the above cyclic olefins include: monocyclic olefins such as cyclopentene, cyclohexene, cyclooctane, cyclopentadiene, and 1,3-cyclohexadiene; bicyclic olefins such as bicyclo[2.2.1]hepta-2-ene(conventional name: norbornene), 5-methyl-bicyclo[2.2.1]hepta-2-ene, 5,5-dimethyl-bicyclo[2.2.1]hepta-2-ene, 5-ethyl-bicyclo[2.2.1]hepta-2-ene, 5-butyl-bicyclo[2.2.1]hepta-2-ene, 5-ethylidene-bicyclo[2.2.1]hepta-2-ene, 5-hexyl-bicyclo[2.2.1]hepta-2-ene, 5-octyl-bicyclo[2.2.1]hepta-2-ene, 5-octadecyl-bicyclo [2.2.1]hepta-2-ene, 5-methylidyne-bicyclo[2.2.1]hepta-2-ene, 5-vinyl-bicyclo[2.2.1]hepta-2-ene, 5-propenyl-bicyclo[2.2.1]hepta-2-ene, 5-methoxy-carbonyl-bicyclo[2.2.1]hepta-2-ene, 5-cyano-bicyclo[2.2.1]hepta-2-ene, 5-methyl-5-methoxycarbonyl-bicyclo[2.2.1]hepta-2-ene, 5-methoxycarbonylbicyclo[2.2.1]hepta-2-ene, 5-ethoxycarbonylbicyclo[2.2.1]hepta-2-ene, 5-methyl-5-methoxycarbonylbicyclo[2.2.1]hepta-2-ene, 5-methyl-5-ethoxycarbonylbicyclo[2.2.1]hepta-2-ene, bicyclo[2.2.1]hepta-5-enyl-2-methylpropionate,bicyclo [2.2.1]hepta-5-enyl-2-methyloctanate, bicyclo[2.2.1]hepta-2-ene-5,6-dicarboxylic acid anhydride, 5-hydroxymethylbicyclo[2.2.1]hepta-2-ene, 5,6-di(hydroxymethyl)bicyclo[2.2.1]hepta-2-ene, 5-hydroxy-i-propylbicyclo[2.2.1]hepta-2-ene, 5,6-dicarboxybicyclo[2.2.1]hepta-2-ene, 5-cyanobicyclo[2.2.1]hepta-2-ene, and bicyclo[2.2.1]hepta-2-ene-5,6-dicarboxylic acid imide; tricyclic olefins such as tricyclo[4.3.0.1^{2,5}]deca-3,7-diene(conventional name: dicyclopentadiene), tricyclo[4.3.0.1^{2,5}]deca-3-ene, tricyclo[4.4.0.1^{2,5}] undeca-3, 7-diene or tricyclo[4.4.0.1^{2,5}] undeca-3,8-diene and a partly hydrogenated product thereof (or an adduct of cyclopentadiene and cylohexene), tricyclo[4.4.0.1^{2,5}]undeca-3-ene, 5-cyclopentyl-bicyclo[2.2.1]hepta-2-ene, 5-cyclohexyl-bicyclo[2.2.1]hepta-2-ene, 5-cyclohexenylbicyclo[2.2.1]hepta-2-ene, and 5-phenyl-bicyclo[2.2.1]hepta-2-ene; tetracyclic olefins such as tetracyclo[4.4.0.1^{2,5}.1^{7,10}]dodeca-3-ene (also simply referred to as tetracyclododecene), 8-methyltetracyclo[4.4.0.1^{2,5}.1^{7,10}]dodeca-3-ene, 8-ethyltetracyclo [4.4.0.1^{2,5}.1^{7,10}]dodeca-3-ene, 8-methylidenetetracyclo[4.4.0.1^{2,5}.1^{7,10}]dodeca-3-ene, 8-ethylidenetetracyclo [4.4.0.1^{2,5}.1^{7,10}]dodeca-3-ene, 8-vinyltetracyclo[4.4.0.1^{2,5}.1^{2,5}.1^{7,10}]dodeca-3-ene, 8-propenyltetracyclo[4.4.0.1^{2,5}.1^{7,10}]dodeca-3-ene, 8-methoxycarbonyltetracyclo[4.4.0.1^{2,5}.1^{7,1}]dodeca-3-ene, 8-methyl-8-methoxycarbonyltetracyclo [4.4.0,1^{2,5}.1^{7,10}]dodeca-3-ene, 8-hydroxymethyltetracyclo[4.4.0.1^{2,5}.1^{7,10}] dodeca-3-ene, and 8-carboxytetracyclo[4.4.0.1^{2,5}.1^{7,10}]dodeca-3-ene; polycyclic olefins such as 8-cyclopentyl-tetracyclo[4.4.0.1^{2,5}.1^{7,10}]dodeca-3-ene, 8-cyclohexyl-tetracyclo[4.4.0.1^{2,5}.1^{7,10}]dodeca-3-ene, 8-cyclohexenyl-tetracyclo [4.4.0.1^{2,5}.1^{7,10}]dodeca-3-ene, 8-phenyl-cyclopentyl-tetracyclo[4.4.0.1^{2,5}.1^{7,10}] dodeca-3-ene, tetracyclo[7.4.1^{3,6}.0^{1.9}.0^{2,7}]tetradeca-4, 9, 11, 13-tetraene (also referred to as 1,4-methano-1,4,4a,9a-tetrahydrofluorene), tetracyclo[8.4.1^{4,7}.0^{1,10}.0^{3,8}]pentadeca-5,10,12,14-tetraene (also referred to as 1,4-methano-1, 4, 4a, 5,10, 10a-hexahydroanthracene),pentacyclo [6.6.1.1^{3,6}.0^{2,7}.0^{9,14}]-4-hexadecene, pentacyclo[6.5.1.1^{3,6}.0^{2,7}.0^{9,13}]-4-pentadecene pentacyclo[7.4.0.0^{2,7}.1^{3,6}.1^{10,13}]-4-pentadecene, heptacyclo[8.7.0.1^{2,9}.1^{4,7}.1^{11,17}.0^{3,8}.0^{12,16}]-5-eicosene, heptacyclo[8.7.0.1^{2,9}.0^{3,8}.1^{4,7}.0^{12,17}.1¹³,¹⁶]-14-eicosene, and a cyclopentadiene tetramer. The above cyclic olefins may be used singly or two or more of them may be used in combination.

Specific examples of α-olefins that may copolymerize with cyclic olefins include ethylene and α-olefins each having 2 to 20, preferably 2 to 8 carbon atoms such as ethylene, propylene, 1-butene, 1-pentene, 1-hexene, 3-methyl-1-butene, 3-methyl-1-pentene, 4-methyl-1-pentene, 3-ethyl-1-pentene, 9-methyl-1-hexene, 4,4-dimethyl-1-pentene, 4,4-dimethyl-1-hexene, 3-ethyl-1-hexene, 4-ethyl-1-hexene, 1-octene, 1-decene, 1-dodecene, 1-tetradecene, 1-hexadecene, 1-octadecene, and 1-eicosene. The above α-olefins may be used singly or two or more of them may be used in combination.

Polymerization methods for the cyclic olefin or for the cyclic olefin and an α-olefin, and methods of hydrogenating the resultant polymers are not particularly limited, and the hydrogenation can be performed according to methods known in the art.

Of the cyclic olefin based resins (A) exemplified above, the addition copolymers of cyclic olefins and α-olefins or hydrogenates thereof (A2) are particularly preferable because a balance between properties and costs is kept.

The cyclic olefin based resins are industrially available as commercially available articles such as brands names, Topas (supplied from Ticona GmbH), Apel (supplied from Mitsui Chemical Co., Ltd.), Zeonex (supplied from Zeon Corporation), Zeonor (supplied from Zeon Corporation), and Arton (supplied from JSR Corporation).

### (B) Modified cyclic olefin based resin

A modified cyclic olefin based resin (B) (referred to as component B) is one modified by grafting and/or copolymerizing an unsaturated carboxylic acid or an unsaturated carboxylic acid anhydride (uc) to one of or a mixture of two or more of the cyclic olefin based resins (A) described above. The cyclic olefin based resin (A) used for the component B before the modification and the cyclic olefin based resin (A) as the component A may be the same or different.

### (uc) Unsaturated carboxylic acid or unsaturated carboxylic acid anhydride

The unsaturated carboxylic acid or unsaturated carboxylic acid anhydride (uc) (referred to as a component uc) used for modifying the component B is an organic compound having one or more carboxyl groups or acid anhydride groups and having one or more ethylenic unsaturated bonds in the molecule.

Examples of the unsaturated carboxylic acid in the component uc include: aliphatic unsaturated monocarboxylic acids such as (meth)acrylic acid and crotonic acid; aromatic unsaturated monocarboxylic acids such as cinnamic acid; aliphatic unsaturated dicarboxylic acids such as maleic acid, fumaric acid, itaconic acid, and citraconic acid; and monoesters of the aliphatic unsaturated dicarboxylic acids with aliphatic alcohols each having 1 to 10 carbon atoms including monoester maleates such as monomethyl maleate, monoethyl maleate, monobutyl maleate, monohexyl maleate, monooctyl maleate, and mono(2-ethylhexyl) maleate, and corresponding monoester fumarates thereof. Of those, (meth)acrylic acid, maleic acid, and monoalkyl maleates are preferable as the unsaturated carboxylic acids. Examples of the unsaturated carboxylic acid anhydride in the component uc include maleic anhydride, itaconic anhydride, citraconic anhydride, and himic anhydride, of which maleic anhydride is preferable. The above components uc may be used singly or two or more of them may be used in combination.

Modification of the cyclic olefin based resin is accomplished by reacting a component A and a component uc in the presence of a radical generator and binding (grafting) the component uc to the component A. Alternatively, when the cyclic olefin based resin is synthesized by polymerizing a monomer, the modified cyclic olefin based resin (B) may be obtained by copolymerizing the above unsaturated carboxylic acid or the unsaturated carboxylic acid anhydride (uc) with the cyclic olefin.

The radical generator is a compound which generates a free radical and has a function as a polymerization initiator which initiates the polymerization of a polymerizable compound, and an organic peroxide is suitably used as the radical generator.

Examples of the radical generator include: alkyl hydroperoxides such as t-butyl hydroperoxide, p-menthane hydroperoxide, cumene hydroperoxide, diisopropylbenzene hydroperoxide, and 2,5-dimethylhexane-2,5-dihydroperoxide; dialkyl peroxides such as di-t-butyl peroxide, t-butylcumyl peroxide, t-butylperoxycumene, dicumyl peroxide, 2,5-dimethyl-2,5-di(t-butylperoxy)hexane, 2,5-dimethyl-2,5-di(t-butylperoxy)hexene-3, and α,α'-bis(t-butylperoxy-m-isopropyl)benzene; diacyl peroxides such as benzoyl peroxide, lauroyl peroxide, and p-chlorobenzoyl peroxide; alkylidene peroxides such as methyl ethyl ketone peroxide, 1,1-bis(t-butylperoxy)-3,3,5-trimethylcyclohexane, and 1,1-bis(t-butylperoxy)cyclododecane; and peracid esters such as n-butyl-4,4-bis(t-butylperoxy)valerate and t-butylperoxybenzoate.

A graft reaction can be performed by kneading the component A, the component uc, and the radical generator in melting states or by dissolving them in an appropriate solvent and mixing and heating the solution, but industrially the method of mixing in the melting states is suitable because of its high productivity.

For melting and kneading, kneading machines commonly used such as an extruder, Brabender, kneader, Banbury mixer, and roll mixer can be utilized, and particularly a closed type apparatus such as an extruder or kneader is preferable. A kneading temperature can be selected from the range of a melting temperature to a decomposing temperature of the component A used, and for example is a temperature which is 30 to 200°C higher than a glass transition temperature (Tg) of the component A. A kneading time period is for example from 20 sec to 1 hour, preferably from about 30 sec to 30 min, and frequently from about 30 sec to 10 min.

A use amount of the component uc used for the modification is dependent on a type of the component, but is approximately from 0.1 to 20 parts by weight and preferably from 0.5 to 10 parts by weight based on 100 parts by weight of the component A which is a base resin. An excessively small use amount of the component uc is not preferable because the desired physical properties of the composition according to the present invention such as prevention of flaking off are not accomplished. An excessively large use amount of the component uc is not preferable because an amount of unreacted compounds in the modified cyclic olefin based resin (B) becomes too large, and thus various adverse effects on the composition occur, which include exudation of the unreacted compounds, reduction of mechanical strength, and nasty odor at molding.

A use amount of the radical generator is dependent on types of the component A, the component uc, and the radical generator used, but is approximately from 0.01 to 5 parts by weight and preferably from 0.1 to 2 parts by weight based on 100 parts by weight of the total amount of the component A and the component uc. An excessively small use amount of the radical generator is not preferable because efficiency of a graft reaction is low, and thus the amount of carboxylic acid or acid anhydride which is not bound to the cyclic olefin based resin becomes large. An excessively large addition amount of the radical generator is not preferable because a crosslinking reaction of the cyclic olefin based resin occurs to coagulate the resin, thereby making it impossible to mix with the other components which compose the composition of the present invention.

A number average molecular weight of the modified cyclic olefin based resin (B) is from 1000 to 1,000,000, and preferably from 10,000 to 100,000.

### (C) Olefinic elastomer

An olefinic elastomer (C) (referred to as component C) according to the present invention is a soft polymer exclusively composed of carbon and hydrogen atoms and having no aromatic ring. Examples of the component C include: α-olefin copolymers such as copolymers of ethylene, propylene, 1-butene, and 1-octene; diene (such as butadiene and isoprene) based polymers; and copolymers of α-olefins and dienes α-olefin copolymers have high heat resistance stability and thus are suitable because they have no unsaturated bonds in their molecules. Examples of the α-olefin copolymers include ethylene-propylene copolymers, ethylene-butene copolymers, and ethylene-octene copolymers.

For hardness of the olefinic elastomer (C), Shore A hardness is 95 or less, and preferably 85 or less.

### (D) Modified polyolefin having an epoxy group

A modified polyolefin (D) (referred to as component D) having an epoxy group according to the present invention is a polymer the backbone of which is made up of carbon-carbon bonds and which has no aromatic ring in the backbone and has an epoxy group in its side chain. Specifically, copolymers of an unsaturated epoxy compound (ue) and an α-olefin and a modified polyolefin prepared by grafting the unsaturated epoxy compound (ue) to polyolefin are exemplified.

### (ue)Unsaturated epoxy compound

An unsaturated epoxy compound (ue) (referred to as component ue) is an organic compound containing one or more ethylenic unsaturated bonds and one or more epoxy groups within its molecule. Examples of the unsaturated epoxy compound (ue) include: unsaturated glycidyl ethers such as allylglycidyl ether, and chalcone glycidyl ether; glycidyl esters and epoxyesters such - as glycidyl (meth) acrylate, vinylbenzoic glycidyl ester, allylbenzoic glycidyl ester, cinnamate glycidyl ester, cinnamylidene acetic acid glycidyl ester, dimer acid glycidyl ester, and esters of epoxydized stearyl alcohol and (meth)acrylic acid; and epoxydized unsaturated chained and cyclic olefins such as epoxyhexene, and limonene oxide. In particular, a glycidyl ether or glycidyl ester with a (meth)acryloyl group is preferable.

Examples of an α-olefin copolymerized with the component ue include α-olefins each having 2 to 10 carbons such as ethylene, propylene, butene, hexene, and octene.

The copolymer of the component ue and the α-olefin which is one representative example of the component (D) is obtained by copolymerizing one or two or more of the components ue and one or two or more of α-olefins. Examples of the copolymer include an ethylene-glycidyl (meth) acrylate copolymer, ethylene-propylene-glycidyl (meth)acrylate copolymer, and ethylene-octene-glycidyl (meth)acrylate copolymer. In particular, the ethylene-glycidyl (meth)acrylate copolymer is easily available industrially and suitable.

A copolymerized amount of the component ue in the copolymer of the component ue and the α-olefin is dependent on types of the component ue and the α-olefin used, but is typically from 0.1 to 30% by weight, and preferably from 1 to 15% by weight. An excessively small copolymerized amount of the component ue is not preferable because the desired physical properties of the composition according to the present invention such as prevention of flaking off are not accomplished. An excessively large copolymerized amount of the component ue is not preferable because cost of the copolymer becomes high.

For a modified polyolefin which is another representative example of the component D, an unsaturated group is grafted to polyolefin to produce a modified polyolefin having an epoxy group by reacting an unsaturated epoxy compound (ue) and polyolefin in the presence of a radical generator using the similar method to the method of manufacturing the modified cyclic olefin based resin (B) previously shown.

Examples of polyolefin which becomes a base of the above modified polyolefin include: homopolymers or copolymers of α-olefins such as ethylene, propylene, 1-butene, and 1-octene; diene (such as butadiene and isoprene) based polymers; and copolymers of α-olefins and dienes.

Polyolefin which becomes the base of the modified polyolefin may be the same as or different from the olefinic elastomer (C), but it is preferred that they be the same.

A use amount of the component ue used for the graft reaction is dependent on the type of the component ue, but is approximately from 0.1 to 20 parts by weight, and preferably from 0.5 to 10 parts by weight based on 100 parts by weight of the polyolefin which is the base resin. An excessively small use amount bf the component ue is not preferable because the desired physical properties of the composition according to the present invention such as prevention of flaking off are not accomplished. An excessively large use amount of the component ue is not preferable because the amount of the component ue which is not bound to polyolefin becomes too large, and thus various adverse effects on the composition occur, which include exudation, reduction of mechanical strength, and nasty odor at molding.

The use amount of the radical generator added at the graft reaction is dependent on types of the polyolefin, the component ue, and the radical generator used, but is approximately from 0.01 to 5 parts by weight, and preferably from 0.1 to 2 parts by weight based on 100 parts by weight of the total amount of the polyolefin and the component ue. An excessively small use amount of the radical generator is not preferable because efficiency of the graft reaction is low, and thus the amount of the component ue which is not bound to polyolefin becomes large. An excessively large addition amount of the radical generator is not preferable because the crosslinking reaction of the polyolefin occurs to coagulate the polyolefin, thereby making it impossible to mix with the other components which compose the composition of the present invention.

The construction ratio of each component which constructs the composition of the present invention is as follows. The weight ratio A/B of the component A to the component B is in the range of 98/2 to 2/98 and preferably 98/2 to 50/50. The weight ratio C/D of the component C to the component D is in the range of 98/2 to 2/98 and preferably 98/2 to 50/50. Further, the ratio (A+B)/(C+D) of the total weight of the component A and the component B to the total weight of the component C and the component D is in the range of 95/5 to 50/50, and preferably 90/10 to 60/40.

The other thermoplastic resins (f), inorganic or organic fillers (g), various compounding agents (h) can be added to the cyclic olefin based resin composition if necessary in the range where the properties of the cyclic olefin based resin composition are not impaired.

Examples of the other thermoplastic resins (f) include: polyphenylene sulfide; polyphenylene ether; polyether sulfone; polysulfone; polycarbonate; polyacetal; polyester based polymers such as a liquid crystal polymer, aromatic polyester, polyallylate, polyethylene terephthalate, and polybutylene terephthalate; polyolefin based polymers such as polyethylene, polypropylene, and poly4-methylpentene-1; polyamide based polymers such as nylon 6, nylon 66, and aromatic nylon; polymethyl methacrylate; polyacrylonitrilestyrene (AS resin); and polystyrene.

Out of the above inorganic or organic fillers (g), examples of the inorganic fillers include, but are not particularly limited to: calcium carbonate powder such as precipitated calcium carbonate light, calcium carbonate heavy or pulverized calcium carbonate, and special calcium type fillers; monchique fine powder; clays such as montmorillonite and bentonite and clays (aluminium silicate powder) such as fired clay and silane modified clay; talc; silica (silicon dioxide) powder such as melted silica and crystal silica; silicate-containing compounds such as diatom earth and silica sand; natural minerals such as pumice stone powder, slate powder, mica, micaceous powder, and asbestos, and pulverized articles thereof; alumina-containing compounds such as alumina, alumina colloid (alumina sol), alumina white, and aluminium sulfate; minerals such as barium sulfate, lithopone, calcium sulfate, molybdenum disulfide, and graphite (black lead); glass type fillers such as glass beads, glass flakes, and foam glass beads; fly ash spheres, volcanic glass hollow body, pumice stone balloon, synthetic inorganic hollow body, carbon hollow body; anthracite culm, artificial ice stone (cryolite), titanium oxide, magnesium oxide, basic magnesium carbonate, dolomite, potassium titanate, monocrystal potassium titanate, calcium sulfite, calcium silicate, aluminium powder, molybdenum sulfide; glass fibers, carbon fibers, boron fibers, and silicon carbide.

Out of the above inorganic or organic fillers (g), examples of the organic fillers include polyethylene fibers, polypropylene fibers, polyester fibers, polyamide fibers, fluorine fibers, ebonite powder, thermosetting resin hollow spheres, thermosetting resin fillers, epoxy resin fillers, silicone type fillers, saran hollow spheres, shellac, wood flour, cork powder, polyvinyl alcohol fibers, cellulose powder, and wood pulp.

The above various compounding agents (h) are not particularly limited so long as they are typically used as thermoplastic resin materials, and examples thereof include compounding agents such as an anti-oxidant, ultraviolet ray absorber, light stabilizer, plasticizer, lubricant, antistatic agent, fire retardant, coloring agent such as a dye or pigment, near infrared ray absorber, and fluorescent brightening agent.

The cyclic olefin based resin composition of the present invention is prepared by mixing the above ingredients according to needs. A method of mixing is not particularly limited so long as it is the method by which those ingredients are thoroughly dispersed. For example, there are a method of kneading in a melted state with a mixer, biaxial kneader, roll, Brabender, monoaxial or biaxial extruder and a method of dissolving compounding agents in an appropriate solvent to disperse the compounding agents followed by eliminating the solvent by coagulation, a cast method, or a direct drying method.

In particular, a method of kneading in a melted state followed by extruding into a stick shape using an extruder and cutting the stick into an appropriate length to make a pellet is high in productivity and suitable. A temperature at melting and kneading varies depending on the type of the cyclic olefin based resin used, but is typically from 100 to 400°C, and preferably from 200 to 350°C.

For the cyclic olefin based resin composition of the present invention, a molding can be obtained as it is and preferably as the above pellet shape by injection molding, injection compression molding, compression molding, extrusion molding, blow molding.

### Examples

Hereinafter, the present invention is specifically illustrated by way of examples.

Physical properties of compositions in Examples and Comparative Examples were evaluated as follows. Charpy impact strength: It was measured according to JIS K7111. Surface flaking off of molding: the presence or absence of flaking off was visually determined using No. 1 test piece used for a tensile test, or the evaluation was performed by a cross cut tape test.

### Visual evaluation

o: no flaking off was observed;
x: flaking off was widely observed;
N/A: no test was done.
Cross cut tape test: The evaluation was performed according to the test method described in JIS K5400-85.2. That is, a total of 100 grid-like cuts with 10 lanes in vertical and horizontal directions, respectively at 1 mm intervals were formed using a cutter knife on a grip portion of the test piece, commercially available Scotch tape was attached, and this tape was quickly peeled off. The number of remaining grids which were not peeled off among 100 grids was rendered as an index of easiness for surface flaking off. A larger number of the remaining grids which were not peeled off means that the grids are more difficult to flake off. In the case of no flaking off, the value becomes 100.

The components A, B, C, and D used in Examples and Comparative Examples are as follows.

### Cyclic olefin based resin (A)

Cyclic olefin based resin A1: Topas 6017 (supplied from Ticona, addition copolymer of norbornene and ethylene, glass transition temperature 174°C)

Cyclic olefin based resin A2: Topas 6015 (supplied from Ticona, addition copolymer of norbornene and ethylene, glass transition temperature 160°C)

Cyclic olefin based resin A3: APL 6015T (supplied from Mitsui Chemicals, addition copolymer of tetracyclododecene and ethylene, glass transition temperature 150°C)

Cyclic olefin based resin A4: Zeonor 1600R (supplied from Nippon Zeon, hydrogenated product of norbornene based cyclic olefin ring opening polymer, glass transition temperature 165°C)

Note that the glass transition temperature was measured with a differential scanning colorimeter (DSC) at a rate of temperature increase of 20°C/min.

### Cyclic olefin for manufacturing modified cyclic olefin based resin B

Topas 5013 (supplied from Ticona, addition copolymer of norbornene and ethylene, glass transition temperature 137°C)

APL 6013T (supplied from Mitsui Chemicals, addition copolymer of tetracyclododecene and ethylene, glass transition temperature 130°C)

Zeonor 1420R (supplied from Nippon Zeon, hydrogenated product of norbornene based cyclic olefin ring opening polymer, glass transition temperature 138°C)

### Modified cyclic olefin based resin (B)

### (Reference Example 1) Synthesis of modified cyclic olefin based resin B1

Precedently mixed with 100 parts by weight of cyclic olefin based resin, Topas 5013 were 2 parts by weight of acrylic acid as an unsaturated carboxylic acid and 0.4 parts by weight of 2,5-dimethyl-2,5-di(t-butylperoxy)hexyne-3 (trade name: Perhexyne 25B (supplied from NOF corporation)) as a radical generator, and a graft reaction was performed by melting and kneading the mixture at a cylinder temperature of 200°C using a 30 mm biaxial extruder to yield a modified cyclic olefin based resin B1.

### (Reference Example 2) Synthesis of modified cyclic olefin based resin B2

A modified cyclic olefin based resin B2 was obtained in the totally same manner as in Reference Example 1 except for using 0.4 parts by weight of α,α'-bis(t-butylperoxy-m-isopropyl)benzene (trade name: Perbutyl P (supplied from NOF corporation)) as a radical generator.

### (Reference Example 3) Synthesis of modified cyclic olefin based resin B3

A modified cyclic olefin based resin B3 was obtained in the totally same manner as in Reference Example 1 except for using 2.7 parts by weight of maleic anhydride serving as an unsaturated carboxylic acid anhydride instead of 2 parts by weight of acrylic acid.

### (Reference Example 4) Synthesis of modified cyclic olefin based resin B4

A modified cyclic olefin based resin B4 was obtained in the totally same manner as in Reference Example 1 except for using APL 6013T as a cyclic olefin based resin.

### (Reference Example 5) Synthesis of modified cyclic olefin based resin B5

A modified cyclic olefin based resin B5 was obtained in the totally same manner as in Reference Example 1 except for using Zeonor 1420R as a cyclic olefin based resin.

### Olefinic elastomer (C) and styrenic elastomer

Olefinic elastomer C1: ethylene-octene, copolymer (supplied from DuPont Dow Elastomers, Engage 8150, Shore hardness A75)

Olefinic elastomer C2: ethylene-propylene copolymer (supplied from Mitsui Chemicals, Tafmer-A-4085, Shore hardness A83)

The following styrenic elastomers were used for comparison.

Styrenic elastomer C3: styrene-ethylene-butylene-styrene block copolymer (styrene volume 29% by weight, supplied from Kraton Polymer, Kraton G1652, Shore hardness A75)

Styrenic elastomer C4: styrene-ethylene-butylene-styrene block copolymer (styrene volume 13% by weight, supplied from Kraton Polymer, Kraton G1657, Shore hardness A65)

### Modified polyolefin having an epoxy group (D)

Modified polyolefin D1: ethylene-glycidyl methacrylate copolymer (trade name: Rex Pearl RA 4100 supplied from Nippon Petrochemicals Co., Ltd.)

### (Reference Example 6) Synthesis of modified polyolefin D2

Precedently mixed with 100 parts by weight of olefinic elastomer C1 were 2 parts by weight of glycidyl acrylate as an unsaturated epoxy compound and 0.4 parts by weight of 2,5-di (t-butylperoxy) hexyne-3 used in Reference Example 1 as the radical generator, and a graft reaction was performed by melting and kneading the mixture at a cylinder temperature of 200°C using a 30 mm biaxial extruder to yield a modified polyolefin D2.

### [Comparative Example 1]

Only the above cyclic olefin based resin A1 was injection-molded at a cylinder temperature of 300°C to make a test piece, and the test piece was evaluated for Charpy impact strength. As a result, the Charpy impact strength was as low as 1. 0 J/m².

### [Comparative Examples 2 to 5]

Improvement of impact strength was attempted by adding the above olefinic elastomer C1 or C2 or the styrenic elastomer C3 or C4 to the cyclic olefin based resin A1.

Precedently mixed with 70% by weight of the cyclic olefin based resin A1 was 30% by weight of the above elastomer, and the mixture was melted and kneaded, and pelletized at a cylinder temperature of 300°C using a 30 mm biaxial extruder to yield compositions.

Those compositions were injection-molded at a cylinder temperature of 300°C to make test pieces, and the test pieces were evaluated for impact strength and surface flaking off. The results are together shown in Table 1.

In the compositions each containing the olefinic elastomer, an impact improvement effect is high whereas remarkable flaking off occurs (Comparative Example 2 or 3). In those each containing the styrenic elastomer with a styrene amount of 30%, there is no surface flaking off but the impact improvement effect is small (Comparative Example 4). When using a styrenic elastomer with less styrene amount, i.e., more rubber component amount, the impact strength is improved but the effect thereof is smaller than that in the case of the olefinic elastomer. Furthermore, the surface flaking off occurs, which is not as bad as that in the case of olefinic elastomer (Comparative Example 5).

**Table 1**

| | | Comparative Example | | | | |
|---|---|---|---|---|---|---|
| | | 1 | 2 | 3 | 4 | 5 |
| Constitution of composition | Unit | | | | | |
| Cyclic olefin based resin A1 | wt% | 100 | 70 | 70 | 70 | 70 |
| Olefinic elastomer C1 | wt% | | 30 | | | |
| Olefinic elastomer C2 | wt% | | | 30 | | |
| Styrenic elastomer C3 | wt% | | | | 30 | |
| Styrenic elastomer C4 | wt% | | | | | 30 |
| Characteristics of composition | | | | | | |
| Charpy impact strength | kJ/m² | 1.0 | 10.1 | 8.2 | 2.1 | 5.0 |
| Surface flaking off of molding | Visual evaluation | N/A | × | × | ○ | × |
| Cross cut tape test | Number of remaining grids | N/A | 54 | 42 | 100 | 93 |

### [Examples 1 to 3 and Comparative Examples 6 and 7]

The cyclic olefin based resin A1, the olefinic elastomer C1, the modified polyolefin D1, and the pellets of the modified olefin based resin B1 manufactured in Reference Example 1 were precedently mixed in constitutions shown in Table 2, and these mixtures were melted and kneaded, and pelletized at a cylinder temperature of 300°C using a 30 mm biaxial extruder to yield compositions. Those compositions were injection-molded at the cylinder temperature of 300°C to make test pieces, and the test pieces were evaluated for impact strength and surface flaking off. The results were shown in Table 2.

As is obvious from the results of Examples 1 to 3, the olefinic elastomer (C) is effective for the improvement of impact strength of the cyclic olefin based resin (A), but has a drawback of causing the surface flaking off. However, it is shown that the impact strength is improved without causing the surface flaking off by the addition of the modified cyclic olefin based resin (B) and the modified polyolefin (D).

It is shown that even when only one of the component B and the component D is added, the improvement of flaking off is observed but is insufficient (Comparative Examples 6 and 7), and both the components are required for the improvement of flaking off.

**Table 2**

| | | Comparative Example | | Example | | |
|---|---|---|---|---|---|---|
| | Unit | 6 | 7 | 1 | 2 | 3 |
| Constitution of composition | | | | | | |
| Cyclic olefin based resin A1 | wt% | 63 | 70 | 63 | 56 | 35 |
| Modified cyclic olefin based resin B1 | wt% | 7 | | 7 | 14 | 35 |
| Olefinic elastomer C1 | wt% | 30 | 24 | 24 | 24 | 15 |
| Modified polyolefin D1 | wt% | | 6 | 6 | 6 | 15 |
| (A+B)/(C+D) | wt ratio | 70/30 | 70/30 | 70/30 | 70/30 | 70/30 |
| A/B | wt ratio | 90/10 | 100/0 | 90/10 | 80/20 | 50/50 |
| C/D | wt ratio | 100/0 | 80/20 | 80/20 | 80/20 | 50/50 |
| Characteristics of composition | | | | | | |
| Charpy impact strength | kJ/m² | 10.8 | 12.5 | 19.0 | 21.3 | 17.5 |
| Surface flaking off of molding | Visual evaluation | × | × | ○ | ○ | ○ |
| Cross cut tape test | Number of remaining grids | 67 | 82 | 100 | 100 | 100 |

### [Examples 4 to 7 and Comparative Examples 8 and 9]

The results shown in Table 3 were obtained by making constitutions shown in Table 3, and performing the molding and the evaluation as is the case with Example 1. Even when the content of the component C is from 20% to 10%, flaking off of a molding occurs (Comparative Examples 8 and 9), but it is possible to eliminate the flaking off by adding the components B and D (Examples 4 to 7).

**Table 3**

| | | Comparative Example | | Example | | | |
|---|---|---|---|---|---|---|---|
| | Unit | 8 | 9 | 4 | 5 | 6 | 7 |
| Constitution of composition | | | | | | | |
| Cyclic olefin based resin A1 | wt% | 80 | 90 | 72 | 76 | 81 | 85.5 |
| Modified cyclic olefin based resin B1 | wt% | | | 8 | 4 | 9 | 4.5 |
| Olefinic elastomer C1 | wt% | 20 | 10 | 16 | 18 | 8 | 9 |
| Modified polyolefin D1 | wt% | | | 4 | 2 | 2 | 1 |
| (A+B)/(C+D) | wt ratio | 80/20 | 90/10 | 80/20 | 80/20 | 90/10 | 90/10 |
| A/B | wt ratio | 100/0 | 100/0 | 90/10 | 95/5 | 90/10 | 95/5 |
| C/D | wt ratio | 100/0 | 100/0 | 80/20 | 90/10 | 80/20 | 90/10 |
| Characteristics of composition | | | | | | | |
| Charpy impact strength | kJ/m² | 5.5 | 2.7 | 12.8 | 11.9 | 4.1 | 3.8 |
| Surface flaking off of molding | Visual evaluation | × | × | ○ | ○ | ○ | ○ |
| Cross cut tape test | Number of remaining grids | 75 | 90 | 100 | 100 | 100 | 100 |

### [Examples 8 to 12]

The results shown in Table 4 were obtained by making constitutions shown in Table 4, and performing the molding and the evaluation as is the case with Example 1.

**Table 4**

| | | Example | | | | |
|---|---|---|---|---|---|---|
| | | 8 | 9 | 10 | 11 | 12 |
| Constitution of composition | Unit | | | | | |
| Cyclic olefin based resin A1 | wt% | 63 | 56 | 63 | 63 | 63 |
| Modified cyclic olefin based resin B1 | wt% | | | 7 | 7 | 7 |
| Modified cyclic olefin based resin B2 | wt% | 7 | | | | |
| Modified cyclic olefin based resin B3 | wt% | | 14 | | | |
| Olefinic elastomer C1 | wt% | 24 | 24 | | 24 | 15 |
| Olefinic elastomer C2 | wt% | | | 24 | | |
| Modified polyolefin D1 | wt% | 6 | 6 | 6 | | |
| Modified polyolefin D2 | wt% | | | | 6 | 15 |
| (A+H)/(C+D) | wt ratio | 70/30 | 70/30 | 70/30 | 70/30 | 70/30 |
| A/B | wt ratio | 90/10 | 80/20 | 90/10 | 90/10 | 90/10 |
| C/D | wt ratio | 80/20 | 80/20 | 80/20 | 80/20 | 50/50 |
| Characteristics of composition | | | | | | |
| Charpy impact strength | kJ/m² | 16.2 | 20.7 | 13.9 | 15.5 | 22.0 |
| Surface flaking off of molding | Visual evaluation | ○ | ○ | ○ | ○ | ○ |
| Cross cut tape test | Number of remaining grids | 100 | 100 | 100 | 100 | 100 |

### [Examples 13 to 15]

The results shown in Table 5 were obtained by making constitutions shown in Table 5, and performing the molding and the evaluation as is the case with Example 1.

**Table 5**

| | | Example | | |
|---|---|---|---|---|
| | Unit | 13 | 14 | 15 |
| Constitution of composition | | | | |
| Cyclic olefin based resin A2 | wt% | 63 | - | |
| Cyclic olefin based resin A3 | wt% | | 63 | |
| Cyclic olefin based resin A4 | wt% | | | 63 |
| Modified cyclic olefin based resin B1 | wt% | 7 | | |
| Modified cyclic olefin based resin B4 | wt% | | 7 | |
| Modified cyclic olefin based resin B5 | wt% | | | 7 |
| Olefinic elastomer C1 | wt% | 24 | 24 | 24 |
| Modified polyolefin D1 | wt% | 6 | 6 | 6 |
| (A+B)/(C+D) | wt ratio | 70/30 | 70/30 | 70/30 |
| A/B | wt ratio | 90/10 | 90/10 | 90/10 |
| C/D | wt ratio | 80/20 | 80/20 | 80/20 |
| Characteristics of composition | | | | |
| Charpy impact strength | kJ/m² | 21.5 | 18.1 | 23.0 |
| Surface flaking off of molding | Visual evaluation | ○ | ○ | ○ |
| Cross cut tape test | Number of remaining grids | 100 | 100 | 100 |

As is obvious from Examples and Comparative Examples described above, it was possible to remarkably improve the impact resistance of the molding of the cyclic olefin based resin composition and further completely eliminate the flaking of the molding surface by combining the modified olefin based resin (B), the olefinic elastomer (C), and the modified polyolefin (D) with the cyclic olefin based resin (A).

### Industrial Applicability

According to the present invention, a molding of a cyclic olefin based resin composition which is excellent in impact resistance, resistance to flaking off is obtained.

## Claims

1. A cyclic olefin based resin composition comprising:
a cyclic olefin based resin (A);
a modified cyclic olefin based resin (B) prepared by grafting and/or copolymerizing an unsaturated carboxylic acid or an unsaturated carboxylic acid anhydride to the cyclic olefin based resin (A);
an olefinic elastomer (C); and
a modified polyolefin (D) having an epoxy group,
wherein a weight ratio A/B of the component A to the component B is in a range of 98/2 to 2/98,
a weight ratio C/D of the component C to the component D is in a range of 98/2 to 2/98, and
a ratio (A+B)/(C+D) of a total weight of the component A and the component B to a total weight of the component C and the component D is in a range of 95/5 to 50/50.

2. The cyclic olefin based resin composition according to claim 1, wherein the component C is a copolymer of ethylene and an α-olefin.

3. The cyclic olefin based resin composition according to claim 1 or 2, wherein the component D is a copolymer of ethylene and glycidyl (meth)acrylate.

4. The cyclic olefin based resin composition according to any one of claims 1 - 3, wherein the component B is a modified cyclic olefin based resin which is obtained by a cyclic olefin based resin being grafted with (meth)acrylic acid or maleic anhydride.

5. The cyclic olefin based resin composition according to any one of claims 1 - 4, wherein a cyclic olefin based resin of the component A and a cyclic olefin based resin used as a base resin prior to modification in the component B are independently a copolymer of ethylene and a cyclic olefin.

6. A molding of cyclic olefin based resin obtained by injection molding, compression molding, injection compression molding, extrusion, or blow molding of the cyclic olefin based resin composition according to any one of claims 1 - 5.

## Patentansprüche

1. Auf einem cyclischen Olefin basierende Harzzusammensetzung, umfassend:
ein auf einem cyclischen Olefin basierendes Harz (A);
ein modifiziertes, auf einem cyclischen Olefin basierendes Harz (B), das durch Pfropfen und/oder Copolymerisieren einer ungesättigten Carbonsäure oder eines ungesättigten Carbonsäureanhydrids auf das bzw. mit dem auf einem cyclischen Olefin basierenden Harz (A) hergestellt ist;
ein olefinisches Elastomer (C); und
ein modifiziertes Polyolefin (D) mit einer Epoxygruppe;
wobei das Gewichtsverhältnis A/B von Komponente A zu Komponente B im Bereich von 98/2 bis 2/98 liegt;
das Gewichtsverhältnis C/D von Komponente C zu Komponente D im Bereich von 98/2 bis 2/98 liegt; und
das Verhältnis (A+B)/(C+D) des Gesamtgewichts von Komponente A und Komponente B zum Gesamtgewicht von Komponente C und Komponente D im Bereich von 95/5 bis 50/50 liegt.

2. Auf einem cyclischen Olefin basierende Harzzusammensetzung gemäß Anspruch 1, wobei die Komponente C ein Copolymer von Ethylen und einem α-Olefin ist.

3. Auf einem cyclischen Olefin basierende Harzzusammensetzung gemäß Anspruch 1 oder 2, wobei die Komponente D ein Copolymer von Ethylen und Glycidyl(meth)acrylat ist.

4. Auf einem cyclischen Olefin basierende Harzzusammensetzung gemäß einem der Ansprüche 1 bis 3, wobei die Komponente B ein modifiziertes, auf einem cyclischen Olefin basierendes Harz ist, das dadurch erhalten wird, dass (Meth)acrylsäure oder Maleinsäureanhydrid auf ein auf einem cyclischen Olefin basierendes Harz gepfropft wird.

5. Auf einem cyclischen Olefin basierende Harzzusammensetzung gemäß einem der Ansprüche 1 bis 4, wobei das auf einem cyclischen Olefin basierende Harz der Komponente A und das als Grundharz vor der Modifikation in Komponente B verwendete, auf einem cyclischen Olefin basierende Harz unabhängig voneinander ein Copolymer von Ethylen und einem cyclischen Olefin sind.

6. Formteil aus einem auf einem cyclischen Olefin basierenden Harz, erhalten durch Spritzgießen, Formpressen, Spritzprägen, Extrusion oder Blasformen der auf einem cyclischen Olefin basierenden Harzzusammensetzung gemäß einem der Ansprüche 1 bis 5.

## Revendications

1. Composition de résine à base d'oléfines cycliques comprenant :
une résine (A) à base d'oléfines cycliques ;
une résine (B) à base d'oléfines cycliques modifiée préparée par greffage et/ou par copolymérisation d'un acide carboxylique insaturé ou d'un anhydride d'acide carboxylique insaturé avec la résine (A) à base d'oléfines cycliques ;
un élastomère (C) oléfinique ; et
une polyoléfine (D) modifiée possédant un groupe époxy,
dans laquelle le rapport de poids A/B du composant A sur le composant B se situe dans une fourchette allant de 98/2 à 2/98, le rapport de poids C/D du composant C sur le composant D se situe dans une fourchette allant de 98/2 à 2/98, et le rapport (A+B)/(C+D) du poids total du composant A et du composant B sur le poids total du composant C et du composant D se situe dans une fourchette allant de 95/5 à 50%50.

2. Composition de résine à base d'oléfines cycliques selon la revendication 1, dans laquelle le composant C est un copolymère d'éthylène et d'α-oléfine.

3. Composition de résine à base d'oléfines cycliques selon la revendication 1 ou 2, dans laquelle le composant D est un copolymère d'éthylène et de (méth)acrylate de glycidyle.

4. Composition de résine à base d'oléfines cycliques selon l' une quelconque des revendications 1 à 3, dans laquelle le composant B est une résine à base d'oléfines cycliques modifiée qui est obtenue par greffage d'une résine à base d'oléfines cycliques avec de l'acide (méth)acrylique ou de l'anhydride maléique.

5. Composition de résine à base d'oléfines cycliques selon l'une quelconque des revendications 1 à 4, dans laquelle une résine à base d'oléfines cycliques du composant A et une résine à base d'oléfines cycliques utilisée comme résine de base avant modification dans le composant B sont indépendamment un copolymère d'éthylène et d'oléfine cyclique.

6. Moulage en résine à base d'oléfines cycliques obtenu par moulage par injection, moulage par compression, moulage par injection-compression, extrusion ou moulage par soufflage de la composition de résine à base d`oléfines cycliques selon l'une quelconque des revendications 1 à 5.
